(19) Europäisches Patentamt European Patent Office Office européen des brevets

(11) **EP 4 773 104 A2**

(12) **EUROPEAN PATENT APPLICATION**

(43) Date of publication:
08.07.2026 Bulletin 2026/28

(21) Application number: 26179285.7

(22) Date of filing: 18.05.2026

(51) International Patent Classification (IPC):
**G06V 20/56** (2022.01)  **G06V 20/70** (2022.01)
**G06V 10/82** (2022.01)

(52) Cooperative Patent Classification (CPC):
**G06V 20/56; G06V 10/82; G06V 20/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.05.2025  CN 202510646229**

(71) Applicant: **Beijing Horizon Information
Technology Co., Ltd.
Beijing 100094 (CN)**

(72) Inventor: **MU, Lisen
Beijing, 100094 (CN)**

(74) Representative: **Müller-Boré & Partner
Patentanwälte PartG mbB
Friedenheimer Brücke 21
80639 München (DE)**

(54) **TARGET SCENE PREDICTION METHOD AND APPARATUS, AND TOKENIZER TRAINING METHOD AND APPARATUS**

(57) A target scene prediction method. The method includes: obtaining first semantic occupancy data corresponding to the target scene at a first time point; performing sparse coding on the first semantic occupancy data to obtain a bird's-eye view feature map; performing, based on a feature codebook, quantization on the bird's-eye view feature map to obtain a first feature index sequence; performing, based on the first feature index sequence, scene prediction using a scene prediction model to obtain a second feature index sequence corresponding to the target scene at a second time point; performing decoding on the second feature index sequence to obtain occupancy state information and semantic category information of second semantic occupancy data; and generating, based on the occupancy state information and the semantic category information, the second semantic occupancy data.

Fig. 1

**Description**

**FIELD**

The present disclosure relates to the technical field of intelligent driving, in particular, to a target scene prediction method and apparatus, and a tokenizer training method and apparatus.

BACKGROUND

The representation technology of semantic occupancy data of an intelligent scene in the current intelligent driving system has significant technical bottlenecks, severely limiting the understanding of the three-dimensional scene and the performance improvement of the world model.

In terms of data processing, the semantic occupancy data are mainly in the form of three-dimensional voxel grids, leading to the serious problem of low space utilization. Specifically, in typical intelligent driving scenes, more than 90% of the voxel grids correspond to low-value empty-space category, and the semantic occupancy data is stored and computed in the form of three-dimensional voxel grids, resulting in a significant waste of GPU memory and computing power.

Therefore, there arises a need for a scene prediction method that can reduce the storage space and computing resources required for scene prediction.

SUMMARY

In order to solve the above-mentioned technical problems, the present disclosure provides a target scene prediction method and apparatus, and a tokenizer training method and apparatus, to reduce the storage space and computing resources required for scene prediction.

In a first aspect of the present disclosure, there is provided a method for predicting a target scene, comprising:

obtaining first semantic occupancy data corresponding to the target scene at a first time point;

performing sparse coding on the first semantic occupancy data to obtain a bird's-eye view feature map corresponding to the target scene at the first time point;

performing, based on a feature codebook, quantization on the bird's-eye view feature map to obtain a first feature index sequence corresponding to the target scene at the first time point;

performing, based on the first feature index sequence, scene prediction using a scene prediction model to obtain a second feature index sequence corresponding to the target scene at a second time point;

performing decoding on the second feature index sequence to obtain occupancy state information and semantic category information of second semantic occupancy data corresponding to the target scene at the second time point; and

generating, based on the occupancy state information and the semantic category information, the second semantic occupancy data corresponding to the target scene at the second time point.

In a second aspect of the present disclosure, there is provided a training method for a tokenizer comprising an encoder, a feature codebook and a decoder, the training method comprising:

obtaining sample semantic occupancy data corresponding to a target scene;

performing, by the encoder, sparse coding on the sample semantic occupancy data to obtain a bird's-eye view feature map corresponding to the target scene;

performing, based on the feature codebook, quantization on the bird's-eye view feature map to obtain a feature index sequence corresponding to the target scene;

performing, by the decoder, decoding on the feature index sequence to obtain reconstructed semantic occupancy data corresponding to the target scene;

training the encoder and/or decoder based on the sample semantic occupancy data, the reconstructed semantic occupancy data and a first loss function, to obtain a trained tokenizer for implementing the method for predicting a target scene according to any of the first aspect; and/or

training the feature codebook based on the bird's-eye view feature map, the feature index sequence and a second loss function, to obtain a trained tokenizer for implementing the method for predicting a target scene according to any of the first aspect.

In a third aspect of the present disclosure, there is provided an apparatus for predicting a target scene, comprising:

a data obtaining module configured to obtain first semantic occupancy data corresponding to the target scene at a first time point;

a sparse coding module configured to perform sparse coding on the first semantic occupancy data to obtain a bird's-eye view feature map corresponding to the target scene at the first time point;

a quantization module configured to perform, based on a feature codebook, quantization on the bird's-eye view feature map to obtain a first feature index sequence corresponding to the target scene at the first time point;

a scene prediction module configured to perform, based on the first feature index sequence, scene prediction using a scene prediction model to obtain a second feature index sequence corresponding to the target scene at a second time point;

a decoding module configured to perform decoding on the second feature index sequence to obtain occupancy state information and semantic category information of second semantic occupancy data corresponding to the target scene at the second time point; and

a data generation module configured to generate, based on the occupancy state information and the semantic category information, the second semantic occupancy data corresponding to the target scene at the second time point.

In a fourth aspect of the present disclosure, there is provided a training apparatus for a tokenizer comprising an encoder, a feature codebook and a decoder, the training apparatus comprising:

a data obtaining module configured to obtain sample semantic occupancy data corresponding to a target scene;

a sparse coding module configured to perform, by the encoder, sparse coding on the sample semantic occupancy data to obtain a bird's-eye view feature map corresponding to the target scene;

a quantization module configured to perform, based on the feature codebook, quantization on the bird's-eye view feature map to obtain a feature index sequence corresponding to the target scene;

a decoding module configured to perform, by the decoder, decoding on the feature index sequence to obtain reconstructed semantic occupancy data corresponding to the target scene;

a first training module configured to train the encoder and/or decoder based on the sample semantic occupancy data, the reconstructed semantic occupancy data and a first loss function, to obtain a trained tokenizer for implementing the method for predicting a target scene provided in the first aspect described above; and/or

a second training module configured to train the feature codebook based on the bird's-eye view feature map, the feature index sequence and a second loss function, to obtain a trained tokenizer for implementing the method for predicting a target scene provided in the first aspect described above.

In a fifth aspect of the present disclosure, there is provided a computer readable storage medium, wherein the storage medium has a computer program stored thereon, and the computer program is used for executing the method for predicting a target scene provided in the first aspect described above, or the training method for a tokenizer provided in the second aspect described above.

In a sixth aspect of the present disclosure, there is provided an electronic device, comprising: a processor; and a memory for storing the executable instructions by the processor; wherein the processor is configured to read the executable instructions from the memory, and execute the instructions to implement the method for predicting a target scene provided in the first aspect described above, or the training method for a tokenizer provided in the second aspect described above.

In a seventh aspect of the present disclosure, there is a computer program product, wherein instructions in the computer program product, when executed by a processor, cause the processor to implement the method for predicting a target scene provided in the first aspect described above, or the training method for a tokenizer provided in the second aspect described above.

In the embodiments of the present disclosure, the electronic device can obtain first semantic occupancy data corresponding to the target scene at a first time point, and perform sparse coding on the first semantic occupancy data to obtain a bird's-eye view feature map corresponding to the target scene at the first time point. Then, the electronic device can perform, based on a feature codebook, quantization on the bird's-eye view feature map to obtain a first feature index sequence corresponding to the target scene at the first time point, and perform, based on the first feature index sequence, scene prediction using a scene prediction model to obtain a second feature index sequence corresponding to the target scene at a second time point. Thereafter, the electronic device can perform decoding on the second feature index sequence to obtain occupancy state information and semantic category information of second semantic occupancy data corresponding to the target scene at the second time point, and generate, based on the occupancy state information and the semantic category information, the second semantic occupancy data corresponding to the target scene at the second time point. In this way, in the process of performing sparse coding and quantization on first semantic occupancy data, the present disclosure can filter out voxels of the empty-space category, and perform coding and quantization only on voxels of the non-empty-space category, thus allowing for extraction of only non-empty-space category information that is effective for scene prediction, and reducing the data storage space while improving computational efficiency; moreover, the present disclosure can compress high-dimensional feature vectors in the first semantic occupancy data into a discrete feature index sequence, and perform scene prediction based on the feature index sequence, thus reducing the storage space and the amount of computing resources required for scene prediction.

## BRIEF DESCRIPTION OF THE DRAWINGS

Fig. 1 illustrates a schematic flowchart of a target scene prediction method provided by an example embodiment of the present disclosure.

Fig. 2A illustrates a schematic diagram of a structure of a scene prediction model provided by an example embodiment of the present disclosure.

Fig. 2B illustrates a schematic diagram of a structure of a scene prediction model provided by another example embodiment of the present disclosure.

Fig. 3 illustrates a schematic flowchart of a target scene prediction method provided by another example embodiment of the present disclosure.

Fig. 4 illustrates a schematic flowchart of a target scene prediction method provided by a further example embodiment of the present disclosure.

Fig. 5 illustrates a schematic flowchart of a target scene prediction method provided by a still further example embodiment of the present disclosure.

Fig. 6 illustrates a schematic flowchart of a tokenizer training method provided by an example embodiment of the present disclosure.

Fig. 7 illustrates a schematic flowchart of a tokenizer training method provided by another example embodiment of the present disclosure.

Fig. 8 illustrates a schematic flowchart of a tokenizer training method provided by a further example embodiment of the present disclosure.

Fig. 9 illustrates a schematic flowchart of a tokenizer training method provided by a still further example embodiment of the present disclosure.

Fig. 10 illustrates a schematic diagram of a structure of a target scene prediction apparatus provided by an example embodiment of the present disclosure.

Fig. 11 illustrates a schematic diagram of a structure of a tokenizer training apparatus provided by an example embodiment of the present disclosure.

Fig. 12 illustrates a diagram of a structure of an electronic device provided by an example embodiment of the present disclosure.

## DETAILED DESCRIPTION OF EMBODIMENTS

In order to make the present disclosure clear, reference below will be made to the drawings to describe in detail example embodiments of the present disclosure. Apparently, the embodiments described herein are only a part of the embodiments of the present disclosure, not all of them. It would be appreciated that the present disclosure is not limited to those example embodiments.

It is worth noting that: unless indicated clearly otherwise, the relative arrangement, numerical expressions, and numerical values of components and steps described in those embodiments do not limit the scope of the present disclosure.

Overview of present disclosure

The representation technology of semantic occupancy data of an intelligent scene in the current intelligent driving system has significant technical bottlenecks, severely limiting the understanding of the three-dimensional scene and the performance improvement of the world model.

In terms of data processing, the semantic occupancy data are mainly in the form of three-dimensional voxel grids, leading to the serious problem of low space utilization. Specifically, in typical intelligent driving scenes, more than 90% of the voxel grids represent the low-value empty-space category, and the semantic occupancy data is stored and computed in the form of three-dimensional voxel grids, resulting in a significant waste of GPU memory and computing power.

To solve the above-mentioned problems, the present disclosure provides a target scene prediction method, including: in the process of performing sparse coding and quantization on first semantic occupancy data, filtering out voxels of the empty-space category, and performing coding and quantization only on voxels of the non-empty-space category, thus allowing for extraction of only non-empty-space category information that is effective for scene prediction, and reducing the data storage space while improving computational efficiency; moreover, the present disclosure can compress high-dimensional feature vectors in the first semantic occupancy data into a discrete feature index sequence, and perform scene prediction based on the feature index sequence, thus reducing the storage space and the amount of computing resources required for scene prediction.

Example Method

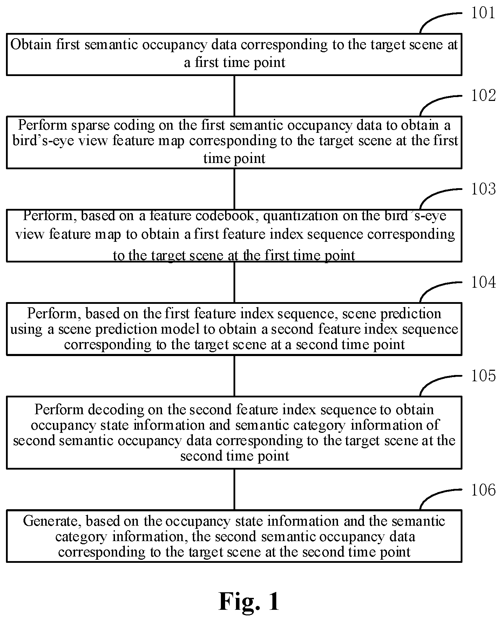

Fig. 1 illustrates a schematic flowchart of a target scene prediction method provided by an example embodiment of the present disclosure. This embodiment can be applied to an electronic device, which includes the following steps, as shown in Fig. 1:

Step 101: obtaining first semantic occupancy data corresponding to the target scene at a first time point.

By way of example, when performing target scene prediction, the electronic device can obtain first semantic occupancy data corresponding to the target scene at a first time point. Wherein, the first time point may be a single time point, or may be a plurality of time points within a certain time period, which is not limited in the embodiment of the present disclosure. The first semantic occupancy data includes information on traffic participants, roads, traffic facilities, and the environment in the target scene. The first semantic occupancy data may be three-dimensional voxel grid data. The three-dimensional voxel grid data may be represented as $X_1 \in R^{H \times W \times D}$. Wherein, H is the length of the three-dimensional voxel grid data, or may be the number of voxel grids of the three-dimensional voxel grid data in the length direction; W is the width of the three-dimensional voxel grid data, or may be the number of voxel grids of the three-dimensional voxel grid data in the width direction; D is the height of the three-dimensional voxel grid data, or may be the number of voxel grids of the three-dimensional voxel grid data in the height direction.

For example, it is assumed that the three-dimensional grid data $X_1 \in R^{100 \times 100 \times 200}$, the three-dimensional voxel grid data $X_1$ includes 100 voxel grids in the length direction, 100 voxel grids in the width direction, and 200 voxel grids in the height direction.

Each voxel grid in the three-dimensional voxel grid data corresponds to a semantic category in a semantic category set. Wherein, the semantic category set includes an empty-space category and (n-1) non-empty-space categories. The non-empty-space categories may include a motor vehicle category, a non-motor vehicle category, a pedestrian category, a building category, a road category, and the like. The semantic category set may be represented as $S=\{O_1, O_2, ..., O_{n-1}, O_n\}$. Wherein, $O_1$ through $O_{n-1}$ are specific semantic categories under the non-empty-space category, and $O_n$ is the empty-space category.

It is worth noting that the electronic device can obtain multi-view image data, point cloud data, and/or the like, corresponding to the target scene acquired by the ego vehicle at the first time point, and generate, using a semantic occupancy data generation algorithm, first semantic occupancy data corresponding to the target scene at the first time point. Specifically, multi-view image data and point cloud data are taken as an example for generating the first semantic occupancy data. The electronic device can first preprocess the multi-view image data and the point cloud data. For example, image correction and image registration are performed on the multi-view image data, and filtering and downsampling are performed on the point cloud data. Then, the electronic device can perform depth estimation and semantic segmentation on the multi-view image data to obtain a depth value and a semantic category of each pixel point in the multi-view image data. Meanwhile, the electronic device can perform feature extraction and semantic segmentation on the point cloud data to obtain a geometric feature and a semantic category of each point cloud in the point cloud data. Subsequently, the electronic device can generate semantic occupancy data based on the depth value and the semantic category of each pixel point in the multi-view image data, and the geometric feature and the semantic category of each point cloud in the point cloud data.

Step 102: performing sparse coding on the first semantic occupancy data to obtain a bird's-eye view feature map corresponding to the target scene at the first time point.

By way of example, after obtaining the first semantic occupancy data, the electronic device can perform sparse coding on the three-dimensional first semantic occupancy data to obtain a bird's-eye view feature map corresponding to the target scene at the first time point. Wherein, the sparse coding is used for filtering out data meaningless for scene prediction from a large amount of three-dimensional first semantic occupancy data, extracting data meaningful for scene prediction, and coding the large amount of three-dimensional first semantic occupancy data (e.g., feature aggregation and feature extraction), thus generating a two-dimensional bird's-eye view feature map with smaller amount of data. Wherein, the process that the electronic device performs sparse coding on the first semantic occupancy data to obtain the bird's-eye view feature map corresponding to the target scene at the first time point, will be described later in detail, and details thereof are omitted herein for brevity.

Step 103: performing, based on a feature codebook, quantization on the bird's-eye view feature map to obtain a first feature index sequence corresponding to the target scene at the first time point.

By way of example, the electronic device may pre-store a feature codebook. The feature codebook includes a plurality of symbols, where each symbol corresponds to a feature vector, and the number of symbols in the feature codebook is typically far less than the number of pixel points in the bird's-eye view feature map. After obtaining the bird's-eye view feature map, for each pixel point in the bird's-eye view feature map, the electronic device can compute vector distances between a feature vector corresponding to the pixel point and feature vectors corresponding to respective symbols in the feature codebook. Then, the electronic device can determine a symbol having the minimum vector distance from the pixel point as a target symbol corresponding to the pixel point. Subsequently, the electronic device can generate, based on indexes of target symbols corresponding to respective pixel points in the feature codebook, a first feature index sequence corresponding to the target scene at the first time point. Wherein, the process that the electronic device performs, based on the feature codebook, quantization on the bird's-eye view feature map to obtain a first feature index sequence corresponding to the target scene at the first time point, will be described later in detail, and details thereof are omitted herein for brevity.

Step 104: performing, based on the first feature index sequence, scene prediction using a scene prediction model to obtain a second feature index sequence corresponding to the target scene at a second time point.

By way of example, after obtaining the first feature index sequence corresponding to the target scene at the first time point, the electronic device can further input the first feature index sequence into the scene prediction model. Correspondingly, the scene prediction model can perform scene prediction based on the first feature index sequence, and output a second feature index sequence corresponding to the target scene at the second time point. For example, the first feature index sequence is $U_1=\{5, 7, 9, ...\}$, and the second feature index sequence is $U_2=\{6, 10, 8, ...\}$.

It is worth noting that the scene prediction model may be a pre-trained world model based on a large language model, or may be another type of scene prediction model, which is not limited in the embodiment of the present disclosure.

Step 105: performing decoding on the second feature index sequence to obtain occupancy state information and semantic category information of second semantic occupancy data corresponding to the target scene at the second time point.

By way of example, after obtaining the second feature index sequence, the electronic device can perform decoding on the second feature index sequence to obtain occupancy state information and semantic category information of second semantic occupancy data corresponding to the target scene at the second time point. The occupancy state information includes occupancy states of respective voxel grids among the three-dimensional voxel grids corresponding to the second semantic occupancy data. Wherein, the occupancy state of the voxel grid represents whether the voxel grid is a voxel grid corresponding to an actual object or region, where the occupancy state has two types: occupied (indicated as 1) and unoccupied (indicated as 0). The semantic category information includes semantic categories of respective voxel grids among the three-dimensional voxel grids corresponding to the second semantic occupancy data. Wherein, the process that the electronic device performs decoding on the second feature index sequence to obtain occupancy state information and semantic category information of second semantic occupancy data corresponding to the target scene at the second time point, will be described later in detail, and the details thereof are omitted herein for brevity.

Step 106: generating, based on the occupancy state information and the semantic category information, the second semantic occupancy data corresponding to the target scene at the second time point.

By way of example, after obtaining the occupancy state information and the semantic category information corresponding to the second semantic occupancy data, the electronic device can generate, based on the occupancy state information and the semantic category information, the second semantic occupancy data corresponding to the target scene at the second time point.

In the embodiments of the present disclosure, the electronic device can obtain first semantic occupancy data corresponding to the target scene at a first time point, and perform sparse coding on the first semantic occupancy data to obtain a bird's-eye view feature map corresponding to the target scene at the first time point. Then, the electronic device can perform, based on a feature codebook, quantization on the bird's-eye view feature map to obtain a first feature index sequence corresponding to the target scene at the first time point, and perform, based on the first feature index sequence, scene prediction using a scene prediction model to obtain a second feature index sequence corresponding to the target scene at a second time point. Thereafter, the electronic device can perform decoding on the second feature index sequence to obtain occupancy state information and semantic category information of second semantic occupancy data corresponding to the target scene at the second time point, and generate, based on the occupancy state information and the semantic category information, the second semantic occupancy data corresponding to the target scene at the second time point. In this way, in the process of performing sparse coding and quantization on first semantic occupancy data, the present disclosure can filter out voxels of the empty-space category, and perform coding and quantization only on voxels of the non-empty-space category, thus allowing for extraction of only non-empty-space category information that is effective for scene prediction, and reducing the data storage space while improving computational efficiency; moreover, the present disclosure can compress high-dimensional feature vectors in the first semantic occupancy data into a discrete feature index sequence, and perform scene prediction based on the feature index sequence, thus reducing the storage space and the amount of computing resources required for scene prediction.

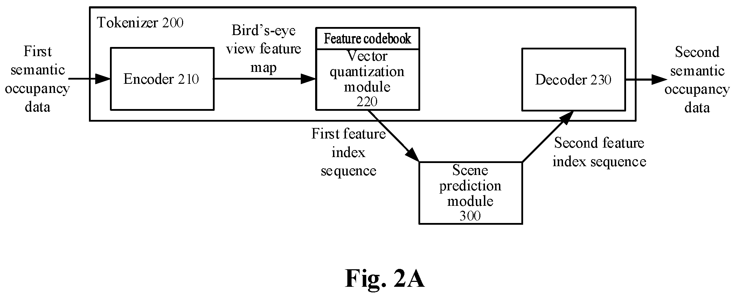

Fig. 2A illustrates a schematic diagram of a structure of a scene prediction model provided by an example embodiment of the present disclosure. As shown therein, the scene prediction is implemented jointly by a tokenizer 200 and a scene prediction model 300. Wherein, the tokenizer 200 includes an encoder 210, a vector quantization module 220 and a decoder 230. The vector quantization module 220 includes a feature codebook. The encoder 210 is used for coding first semantic occupancy data to obtain a bird's-eye view feature map. The vector quantization module 220 is used for performing, based on the feature codebook, vector quantization on the bird's-eye view feature map to obtain a first feature index sequence. The scene prediction model 300 is used for performing scene prediction on the first feature index sequence to obtain a second feature index sequence. The decoder 230 is used for decoding the second feature index sequence to obtain second semantic occupancy data. In the embodiment shown in Fig. 1, the step 102 is performed by the encoder 210, the step 103 is performed by the vector quantization module 220, the step 104 is performed by the scene prediction model 300, and the steps 105 and 106 are performed by the decoder 230.

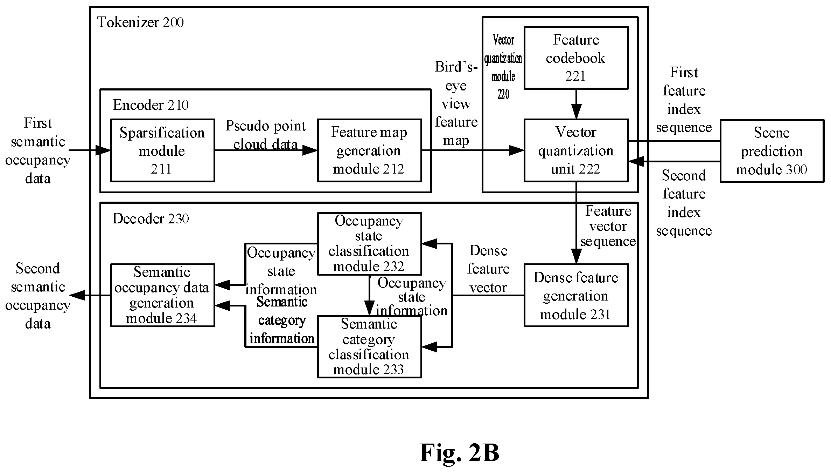

Fig. 2B illustrates a schematic diagram of a structure of a scene prediction model provided by another example embodiment of the present disclosure. As shown therein, the encoder 210 includes a sparsification module 211 and a feature map generation module 212. The vector quantization module 220 includes a feature codebook 221 and a vector quantization unit 222. The decoder 230 includes a dense feature generation module 231, an occupancy state classification module 232, a semantic category classification module 233 and a semantic occupancy data generation module 234. Wherein, the sparsification module 211 is used for performing sparsification on the first semantic occupancy data to obtain pseudo point cloud data. The feature map generation module 212 is used for performing feature aggregation and feature extraction on the pseudo point cloud data to obtain the bird's-eye view feature map. The vector quantization unit 222 is used for performing, based on the feature codebook 221, quantization on the bird's-eye view feature map to obtain a first feature index sequence. The scene prediction model 300 is used for performing scene prediction on the first feature index sequence to obtain a second feature index sequence. The vector quantization unit 222 is further used for performing, based on the feature codebook 221, mapping on the second feature index sequence to obtain a feature vector sequence. The dense feature generation module 231 is used for performing stacked deconvolution and upsampling on the feature vector sequence to obtain a dense feature vector. The occupancy state classification module 232 is used for performing occupancy state classification on the dense feature vector to obtain occupancy state information. The semantic category classification module 233 is used for performing, based on the occupancy state information output by the occupancy state classification module 232, semantic category classification on the dense feature vector to obtain the semantic category information. The semantic occupancy data generation module 234 is used for generating second semantic occupancy data based on the occupancy state information and the semantic category information.

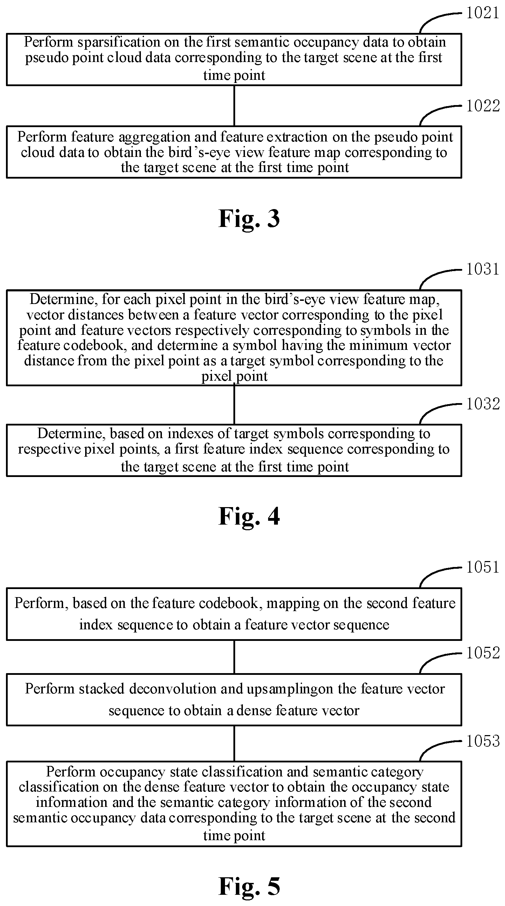

Referring to Fig. 3, on the basis of the embodiment shown in Fig. 1, the step 102 may include the following steps: Step 1021: performing sparsification on the first semantic occupancy data to obtain pseudo point cloud data corresponding to the target scene at the first time point.

By way of example, referring to Figs. 2A and 2B, the first semantic occupancy data is three-dimensional voxel grid data. After obtaining the first semantic occupancy data, the electronic device can perform sparsification on the first semantic occupancy data by means of the encoder 210 to obtain pseudo point cloud data corresponding to the target scene at the first time point. Wherein, the sparsification is used for filtering out data meaningless for scene prediction from the first semantic occupancy data (i.e., filtering out voxel grids with the semantic category being the empty-space category from the three-dimensional voxel grid data), and extracting data meaningful for scene prediction (i.e., extracting voxel grids with the semantic category being the non-empty-space category from the three-dimensional voxel grid data). The point cloud data typically refer to a set of points in a three-dimensional space obtained by a device such as a LiDAR or the like, and each point includes three-dimensional spatial coordinates and attribute information. The conventional point cloud data is typically sparse, i.e., only a limited number of points are included in the three-dimensional space, and those points are mainly concentrated on a surface or key positions of an object. Therefore, the electronic device performs sparsification on the first semantic occupancy data, i.e., the electronic device filters out voxel grids of the empty-space category, which are meaningless for scene prediction, from the first semantic occupancy data, and extracts voxel grids of the non-empty-space category, which are meaningful for scene prediction. Though being similar to the conventional point cloud data, the obtained first semantic occupancy data having been subject to the sparsification are referred to as pseudo point cloud data herein to distinguish from the conventional point cloud data.

Step 1022: performing feature aggregation and feature extraction on the pseudo point cloud data to obtain the bird's-eye view feature map corresponding to the target scene at the first time point.

By way of example, referring to Figs. 2A and 2B, after obtaining the pseudo point cloud data, the electronic device can perform, by means of the encoder 210, feature aggregation and feature extraction on the pseudo point cloud data along the bird's-eye view direction to obtain a two-dimensional bird's-eye view feature map corresponding to the target scene at the first time point.

In the embodiment of the present disclosure, the electronic device can perform sparsification on the first semantic occupancy data to obtain pseudo point cloud data corresponding to the target scene at the first time point. Then, the electronic device can perform feature aggregation and feature extraction on the pseudo point cloud data to obtain a bird's-eye view feature map corresponding to the target scene at the first time point. In this way, by filtering out the voxel grids of the empty-space category from the three-dimensional voxel grids, thus obtaining pseudo point cloud data, and further generating a two-dimensional bird's-eye view feature map from the three-dimensional pseudo point cloud data, the present disclosure can reduce the storage space and the computing resources required for scene prediction.

On the basis of the embodiment shown in Fig. 3, the step 1021 may include the following steps: Step I: performing voxel grid stacking on the first semantic occupancy data along a height direction to obtain voxel pillar data.

By way of example, the first semantic occupancy data is three-dimensional voxel grid data $X_1 \in R^{H \times W \times D}$. After obtaining the first semantic occupancy data corresponding to the target scene at the first time point, the electronic device can perform voxel grid stacking on the three-dimensional voxel grid data $X_1 \in R^{H \times W \times D}$ along the height direction to obtain voxel pillar data. Wherein, the voxel pillar data includes H×W voxel pillars, and each voxel pillar is formed by stacking D voxel grids.

For example, it is assumed that the three-dimensional voxel grid data are $X_1 \in R^{100 \times 100 \times 200}$, after the electronic device performs voxel grid stacking on the three-dimensional voxel grid data along the height direction, the obtained voxel pillar data includes 100×100 voxel pillars, and each voxel pillar is formed by stacking 200 voxel grids.

Step II: determining, for each voxel pillar in the voxel pillar data, a preset number of target voxel grids belonging to a target category from respective voxel grids included in the voxel pillar.

By way of example, after determining the voxel pillar data based on the first semantic occupancy data, for each voxel pillar in the voxel pillar data, the electronic device can determine a preset number of target voxel grids with the semantic category being a target category from respective voxel grids included in the voxel pillar. Wherein, the target category may be the non-empty-space category, or may be some specific categories under the non-empty-space category, which is not limited in the embodiment of the present disclosure. In this embodiment of the present disclosure, the description is provided in the case where the target category is the non-empty-space category, and other cases are similar to this one, which will not be detailed herein for brevity. Further, the number of voxel grids of the non-empty-space category is varied in different voxel pillars. The preset number may be a preset, fixed number (i.e., the preset numbers corresponding to different voxel pillars are all identical), or may be a number of the voxel grids of the non-empty-space category included in different voxel pillars (i.e., the preset numbers corresponding to different voxel pillars are different), which is not limited in the embodiment of the present disclosure. In this embodiment of the present disclosure, the description is provided in the case where the preset number is a preset fixed number, and other cases are similar to this one, which will not be detailed herein for brevity. Still further, the respective target voxel grids may be continuous, or may be discontinuous.

For example, it is assumed that the voxel pillar data includes 100×100 voxel pillars, and each voxel pillar is formed by stacking 200 voxel grids. For each voxel pillar, the electronic device can determine 50 target voxel grids of the non-empty-space category from the 200 voxel grids included in the voxel pillar.

Step III: determining, based on height coordinates and semantic categories of the target voxel grids included in respective voxel pillars, pseudo point cloud data corresponding to the target scene at the first time point.

By way of example, for each voxel pillar, after determining a preset number of target voxel grids with a semantic category being the target category from respective voxel grids included in the voxel pillar, the electronic device can generate, based on height coordinates and semantic categories of the target voxel grids included in the respective voxel pillars, pseudo point cloud data corresponding to the target scene at the first time point. The pseudo point cloud data may be represented as $Y \in P^{H \times W} = \{(d_m, l_m)\}_M^{H \times W}$. Wherein, M is a number of target voxel grids corresponding to each voxel pillar (i.e., a preset number), $d_m$ is height coordinates of the $m^{th}$ target voxel grid in the voxel pillar, and $l_m$ is a semantic category (a specific category under the non-empty-space category) of the $m^{th}$ target voxel grid in the voxel pillar.

For example, it is assumed that the voxel pillar data includes 100× 100 voxel pillars, each voxel pillar is formed by stacking 200 voxel grids. For each voxel pillar, the electronic device can determine 50 target voxel grids of the non-empty-space category from 200 voxel grids included in the voxel pillar. Correspondingly, the pseudo point cloud data may be represented as $Y \in P^{100 \times 100} = \{(d_1, l_1), (d_2, l_2) ... (d_{50}, l_{50})\}_{50}^{100 \times 100}$.

In the embodiment of the present disclosure, the electronic device performs voxel grid stacking on the first semantic occupancy data along the height direction to obtain the voxel pillar data. Then, for each voxel pillar in the voxel pillar data, the electronic device determines a preset number of target voxel grids with the target semantic category being the non-empty-space category from the respective voxel grids included in the voxel pillar, and determines, based on the height coordinates and the semantic category of the target voxel grids included in the respective voxel pillars, pseudo point cloud data corresponding to the target scene at the first time point. In this way, by filtering out the voxel grids of the empty-space category in the three-dimensional voxel grids, the present disclosure can significantly reduce the storage space and the amount of computing resources required for scene prediction.

On the basis of the embodiment shown in Fig. 3, the step 1022 may include the following steps:

Step I: performing feature aggregation along a bird's-eye view direction on the target voxel grids included in the respective voxel pillars of the pseudo point cloud data to obtain a pseudo feature map.

By way of example, after determining the pseudo point cloud data, for each voxel pillar in the pseudo point cloud data, the electronic device can perform view shifting on the respective target voxel grids included in the voxel pillar along the bird's-eye view direction on a horizontal plane (i.e., a plane formed by the H direction and the W direction) to obtain the respective target voxel grids after view shifting. Next, the electronic device can further perform feature aggregation on the respective target voxel grids included in the voxel pillar after view shifting to obtain a feature vector corresponding to the voxel pillar. Wherein, the feature vector corresponding to the voxel pillar includes height features and semantic category features of the respective target voxel grids. For example, a certain voxel pillar includes 3 target voxel grids, a target voxel grid set corresponding to the voxel pillar after view shifting is {(d_m=5, l_m=[100]), (d_m=10, l_m=[010]), (d_m=15, l_m=[001])}, and after the feature aggregation, the feature vector corresponding to the voxel pillar is (10, [1/3, 1/3, 1/3]). Then, the electronic device can generate a pseudo feature map based on the feature vectors corresponding to the respective voxel pillars. Wherein, the pseudo feature map is a two-dimensional feature map, and each voxel pillar is equivalent to a pixel point in a two-dimensional feature map. The pseudo feature map includes a two-dimensional planar feature, a height feature and a semantic category feature of the three-dimensional space. The conventional feature map is generated based on two-dimensional image data, and typically includes feature information of the two-dimensional image data in the two-dimensional plane. Though being similar to the conventional feature map, the two-dimensional feature map generated based on the pseudo point cloud representing three dimensions in the embodiment of the present disclosure includes the height feature and the semantic category feature of the three-dimensional space, and is referred to as pseudo feature map to distinguish from the conventional feature map.

Step II: performing feature extraction on the pseudo feature map to obtain the bird's-eye view feature map corresponding to the target scene at the first time point.

By way of example, after obtaining the pseudo feature map, the electronic device can further perform feature extraction and downsampling to obtain a bird's-eye view feature map corresponding to the target scene at the first time point. The bird's-eye view feature map may be represented as $Z \in R^{h \times w \times c}$. Wherein, h= H/r is the length of the bird's-eye view feature map, w=W/r is the width of the bird's-eye view feature map, r is the downsampling rate, and c is the feature dimension of the bird's-eye view feature map. The electronic device can perform feature extraction and downsampling on the pseudo feature map based on a hierarchical feature extraction model (e.g., Swin Transformer model) to obtain a bird's-eye view feature map. Certainly, the electronic device can also perform the feature extraction and the downsampling based on another type of feature extraction model to obtain the bird's-eye view feature map, which is not limited in the embodiment of the present disclosure.

In the embodiment of the present disclosure, the electronic device can perform feature aggregation along the bird's-eye view direction on the target voxel grids included in the respective voxel pillars of the pseudo point cloud data to obtain a pseudo feature map. Subsequently, the electronic device performs feature extraction on the pseudo feature map to obtain a bird's-eye view feature map corresponding to the target scene at the first time point. In this way, by generating a two-dimensional bird's-eye view feature map from the three-dimensional pseudo point cloud data, the present disclosure can further reduce the storage space and the amount of computing resources required for scene prediction.

Referring to Fig. 4, on the basis of the embodiment shown in Fig. 1, the step 103 may include the following steps: Step 1031: determining, for each pixel point in the bird's-eye view feature map, vector distances between a feature vector corresponding to the pixel point and feature vectors respectively corresponding to symbols in the feature codebook, and determining a symbol having the minimum vector distance from the pixel point as a target symbol corresponding to the pixel point.

By way of example, after obtaining the bird's-eye view feature map $Z \in R^{h \times w \times c}$, the electronic device can flatten the feature vectors of the respective pixel points in the bird's-eye view feature map into a feature vector sequence, according to a preset sequence (e.g., from top to bottom, or from left to right). The feature vector sequence corresponding to the bird's-eye view feature map may be represented as $Z = \{z_i\}_{i=1}^n$. Wherein, n is the number of pixel points in the bird's-eye view feature map, or may be the number of feature vectors in the feature vector sequence, where n=h×w, $z_i$ is the feature vector corresponding to the $i^{th}$ pixel point, and the feature dimension of $z_i$ is c. The electronic device may pre-store a feature codebook therein. The feature codebook includes a plurality of symbols, where each symbol corresponds to a feature vector, and the number of symbols in the feature codebook is typically far less than the number of pixel points in the bird's-eye view feature map. The feature codebook may be represented as $T = \{t_k\}_{k=1}^K$. Wherein, K is the number of symbols in the feature codebook, and $t_k$ is the $k^{th}$ symbol in the feature codebook.

Further, after obtaining the feature vector sequence corresponding to the bird's-eye view feature map, for each pixel point in the bird's-eye view feature map, the electronic device can compute vector distances (e.g., L2 distances) between the feature vector corresponding to the pixel point and the feature vectors corresponding to the respective symbols in the feature codebook. Next, the electronic device can determine the symbol with the minimum vector distance from the pixel point as a target symbol corresponding to the pixel point. For example, the target symbol corresponding to the $1^{st}$ pixel point is the $5^{th}$ symbol in the feature codebook, the target symbol corresponding to the $2^{nd}$ pixel point is the $7^{th}$ symbol in the feature codebook, the target symbol corresponding to the $3^{rd}$ pixel point is the $9^{th}$ symbol in the feature codebook ... and so on. The process can be represented by the following equation.

$$Q(Z) = \arg\min_{t_k}|z_i - t_k|_2, z_i \in Z, t_k \in T$$

Wherein, Q(Z) indicates determining, in the feature codebook, the symbols with the minimum vector distance corresponding to the respective feature vectors in the feature vector sequence corresponding to the bird's-eye view feature map. $|z_i - t_k|_2$ indicates the L2 distance between the $i^{th}$ feature vector in the feature vector sequence Z and the $k^{th}$ symbol in the feature codebook.

It is worth noting that the target symbols corresponding to different pixel points in the bird's-eye view feature map may be the same symbol, or may be different symbols, which is not limited in the embodiment of the present disclosure.

Step 1032: determining, based on indexes of target symbols corresponding to respective pixel points, a first feature index sequence corresponding to the target scene at the first time point.

By way of example, after obtaining the target symbols corresponding to the respective pixel points in the bird's-eye view feature map, the electronic device can generate, based on indexes of the target symbols corresponding to the respective pixel points in the feature codebook (i.e., serial numbers of the target symbols in the feature codebook), a first feature index sequence (also referred to as first token sequence) corresponding to the target scene at the first time point. For example, if the target symbol corresponding to the $1^{st}$ pixel point is the $5^{th}$ symbol in the feature codebook, the target symbol corresponding to the $2^{nd}$ pixel point is the $7^{th}$ symbol in the feature codebook, the target symbol corresponding to the $3^{rd}$ pixel point is the $9^{th}$ symbol in the feature codebook ... and so on, the first feature index sequence is $U_1=\{5, 7, 9, ...\}$.

In the embodiment of the present disclosure, for each pixel point in the bird's-eye view feature map, the electronic device determines vector distances between a feature vector corresponding to the pixel point and feature vectors corresponding to respective symbols in the feature codebook, and determines a symbol having the minimum vector distance from the pixel point as a target symbol corresponding to the pixel point. Then, the electronic device determines, based on indexes of target symbols corresponding to respective pixel points, a first feature index sequence corresponding to the target scene at the first time point. In this way, the electronic device can compress high-dimensional feature vectors of respective pixel points in the bird's-eye view feature map into a discrete feature index sequence, thus further reducing the storage space and the amount of computing resources required for scene prediction.

Referring to Fig. 5, on the basis of the embodiment as shown in Fig. 1, the step 105 may include the following steps:

Step 1051: performing, based on the feature codebook, mapping on the second feature index sequence to obtain a feature vector sequence.

By way of example, the feature indexes in the feature index sequence are indexes of the symbols in the feature codebook. Therefore, referring to Figs. 2A and 2B, after obtaining the second feature index sequence corresponding to the target scene at the second time point output by the scene prediction model, the electronic device can map, by means of the vector quantization module 220, the respective feature indexes in the second feature index sequence to the feature codebook to obtain symbols corresponding to the respective feature indexes. Subsequently, the electronic device can generate a feature vector sequence based on the symbols corresponding to the respective feature indexes. For example, if the second feature index sequence is U2= 16, 10, 8, ...}, the generated feature vector sequence is {$t_6$, $t_{10}$, $t_8$, ...}. Wherein, $t_6$ is the 6th symbol in the feature codebook T, $t_{10}$ is the 10th symbol in the feature codebook, and $t_8$ is the 8th symbol in the feature codebook T. The feature vector sequence may represent the bird's-eye view feature map of the target scene at the second time point.

Step 1052: performing stacked deconvolution and upsampling on the feature vector sequence to obtain a dense feature vector.

By way of example, the feature vector sequence may represent the bird's-eye view feature map of the target scene at the second time point. Accordingly, referring to Figs. 2A and 2B, after obtaining the feature vector sequence, the electronic device can perform, by means of the decoder 230, stacked deconvolution and upsampling on the feature vector sequence, i.e., the electronic device can generate a four-dimensional dense feature vector from the two-dimensional bird's-eye view feature map of the target scene at the second time point. The fourth-dimensional dense feature vector is a fourth-dimensional matrix that includes H elements in the length direction, W elements in the width direction, and D elements in the height direction, where the feature dimension of each element is C. The dense feature vector may be represented as $F \in R^{H \times W \times D \times C}$. Wherein, H may be the length of the dense feature vector, or may be the number of elements of the dense feature vector in the length direction, W may be the width of the dense feature vector, or may be the number of elements of the dense feature vector in the width direction, D may be the height of the dense feature vector, or may be the number of elements of the dense feature vector in the height direction, and C is a feature dimension of an element. An element in the dense feature vector is similar to a voxel grid in the three-dimensional voxel grid data.

Step 1053: performing occupancy state classification and semantic category classification on the dense feature vector to obtain the occupancy state information and the semantic category information of the second semantic occupancy data corresponding to the target scene at the second time point.

By way of example, referring to Figs. 2A and 2B, after obtaining the dense feature vector, the electronic device can input the dense feature vector into the occupancy state classification module 232 and the semantic category classification module 233 in the decoder 230. Correspondingly, the occupancy state classification module 232 performs, based on the feature vectors corresponding to the respective elements in the dense feature vector, occupancy state classification on the respective elements to obtain occupancy states corresponding to the respective elements. Wherein, an occupancy state of an element indicates whether the element is an element corresponding to an actual object or region, and the occupancy state has two types, namely occupied (represented as 1) and non-occupied (represented as 0). The semantic category classification module 233 performs semantic category classification on the respective elements based on the feature vectors corresponding to the respective elements with the occupancy state being occupied in the dense feature vector to obtain semantic categories corresponding to the respective elements. Since an element in the dense feature vector is similar to a voxel grid in the three-dimensional voxel grid data, after obtaining the occupancy states and the semantic categories corresponding to the respective elements in the dense feature vector, the electronic device obtains the occupancy states and the semantic categories corresponding to the respective voxel grids in the second semantic occupancy data, and thus obtains the occupancy state information and the semantic category information of the second semantic occupancy data.

In the embodiment of the present disclosure, the electronic device performs occupancy state classification on the dense feature vector, and determines the occupancy states corresponding to the respective voxel grids in the second semantic occupancy data. Next, the electronic device performs the semantic category classification on first voxel grids with an occupancy state being occupied to obtain semantic categories of the respective first voxel grids, and thus obtains occupancy state information and the semantic category information of the second semantic occupancy data. In this way, after determining the occupancy states corresponding to the respective voxel grids in the second semantic occupancy data, the electronic device performs semantic category classification only on the first voxel grids with the occupancy state being occupied to obtain the semantic categories of the respective first voxel grids, and can thus balance the proportion of data of different categories and improve the geometric fidelity of scene prediction.

On the basis of the embodiment shown in Fig. 5, the step 1053 may include the following steps:

Step I: performing the occupancy state classification on the dense feature vector, and determining occupancy states corresponding to respective voxel grids in the second semantic occupancy data to obtain the occupancy state information of the second semantic occupancy data corresponding to the target scene at the second time point.

By way of example, an element in the dense feature vector is similar to a voxel grid in the three-dimensional voxel grid data. Therefore, after obtaining the dense feature vector, the electronic device can input the dense feature vector into the occupancy state classification module. Wherein, the occupancy state classification module may include a support vector machine-based classifier, or may include a deep learning-based classifier, which is not limited in the embodiment of the present disclosure. Correspondingly, for the respective elements in the dense feature vector, the occupancy state classification module can perform, based on the feature vectors corresponding to the respective elements, occupancy state classification, and output the occupancy states corresponding to the respective elements. Wherein, an occupancy state of an element indicates whether the element is an element corresponding to an actual object or region, and the occupancy state has two types, namely occupied (represented as 1) and non-occupied (represented as 0). In the case of obtaining the occupancy states corresponding to the respective elements in the dense feature vector output by the occupancy state classification module, the electronic device obtains the occupancy states corresponding to the respective voxel grids in the second semantic occupancy data corresponding to the target scene at the second time point, and further obtains the occupancy state information of the second semantic occupancy data. Similar to the first semantic occupancy data, the second semantic occupancy data may be represented as $X_2 \in R^{H \times W \times D}$, and the occupancy state information of the second semantic occupancy data may be represented as $X_{2,a}$. Wherein, H may be the length of the three-dimensional voxel grid data, or may be the number of voxel grids of the three-dimensional voxel grid data in the length direction, W may be the width of the three-dimensional voxel grid data, or may be the number of voxel grids of the three-dimensional voxel grid data in the width direction, and D may be the height of the three-dimensional voxel grid data, or may be the number of voxel grids of the three-dimensional voxel grid data in the height direction.

Step II: performing the semantic category classification on first voxel grids with an occupancy state being occupied to obtain semantic categories of the respective first voxel grids.

By way of example, after obtaining the occupancy state information of the second semantic occupancy data, the electronic device can determine, based on the occupancy state information, first voxel grids with the occupancy state being occupied from the second semantic occupancy data, i.e., the electronic device can determine first elements with the occupancy state being occupied from the respective elements in the dense feature vector. Subsequently, the electronic device can input the first elements with the occupancy state being occupied into the semantic category classification module. Wherein, the semantic category classification module may include a support vector machine-based classifier, or may include a deep learning-based classifier, which is not limited in the embodiment of the present disclosure. Correspondingly, the semantic category classification module can perform, based on the feature vectors corresponding to the respective first elements, semantic category classification on the respective first elements, and output the semantic categories corresponding to the respective first elements. Wherein, the semantic categories corresponding to the respective first elements belong to the semantic category set S'={$O_1$, $O_2$, ..., $O_{n-1}$}, where $O_1$ through $O_{n-1}$ are specific semantic categories under the non-empty-space category. In the case of obtaining the semantic categories corresponding to the respective first elements in the dense feature vector output by the semantic category classification, the electronic device obtains the semantic categories corresponding to the respective first voxel grids in the second semantic occupancy data corresponding to the target scene at the second time point.

Step III: determining, based on the semantic categories of the first voxel grids and semantic categories corresponding to second voxel grids, the semantic category information of the second semantic occupancy data corresponding to the target scene at the second time point, the second voxel grids being voxel grids with an occupancy state being unoccupied.

By way of example, for second voxel grids with the occupancy state being unoccupied in three-dimensional voxel grid data corresponding to the second semantic occupancy data, the electronic device can determine the semantic category of the second voxel grids as the empty-space category. After obtaining the semantic categories of the first voxel grids with the occupancy state being occupied in the three-dimensional voxel grid data, the electronic device can determine, based on the semantic categories of the first voxel grids and the semantic category corresponding to the second voxel grids, the semantic category information of the second semantic occupancy data. Wherein, the semantic category information of the second semantic occupancy data may be represented as $X_{2,b}$.

In the embodiment of the present disclosure, the electronic device performs occupancy state classification on the dense feature vector, and determines the occupancy states corresponding to the respective voxel grids in the second semantic occupancy data. Then, the electronic device performs semantic category classification on the first voxel grids with the occupancy state being occupied to obtain the semantic categories of the respective first voxel grids, and thus obtains the occupancy state information and the semantic category information of the second semantic occupancy data. In this way, after determining the occupancy states corresponding to the respective voxel grids in the second semantic occupancy data, the electronic device performs semantic category classification only on the first voxel grids with the occupancy state being occupied to obtain the semantic categories of the respective first voxel grids, and can thus balance the proportion of data of different categories and improve the geometric fidelity of scene prediction.

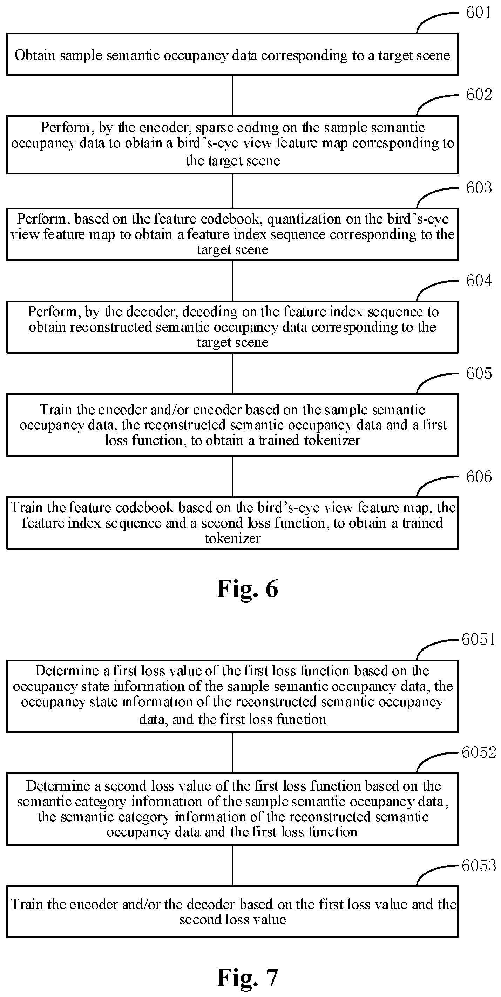

Fig. 6 illustrates a schematic flowchart of a tokenizer training method provided by an example embodiment of the present disclosure. As shown in Fig. 2, the tokenizer includes: an encoder, a feature codebook and a decoder. This embodiment can be applied to an electronic device, and includes the following steps, as shown in Fig. 6:
Step 601: obtaining sample semantic occupancy data corresponding to a target scene.

By way of example, when training an initial tokenizer, the electronic device can obtain sample semantic occupancy data corresponding to a target scene. Wherein, the sample semantic occupancy data is similar to the first semantic occupancy data in the step 101 described above, and details thereof are thus omitted herein for brevity.

Step 602: performing, by the encoder, sparse coding on the sample semantic occupancy data to obtain a bird's-eye view feature map corresponding to the target scene.

By way of example, after obtaining the sample semantic occupancy data, the electronic device can perform, by means of the encoder, sparse coding on the sample semantic occupancy data to obtain a bird's-eye view feature map corresponding to the target scene. Wherein, the process that the electronic device performs, by means of the encoder, sparse coding on the sample semantic occupancy data to obtain a bird's-eye view feature map corresponding to the target scene, is similar to the step 102 described above, and details thereof are thus omitted herein for brevity.

Step 603: performing, based on the feature codebook, quantization on the bird's-eye view feature map to obtain a feature index sequence corresponding to the target scene.

By way of example, after obtaining the bird's-eye view feature map, the electronic device can perform, based on the feature codebook, quantization on the bird's-eye view feature map to obtain a feature index sequence corresponding to the target scene. Wherein, the process that the electronic device performs, based on the feature codebook, quantization on the bird's-eye view feature map to obtain a feature index sequence corresponding to the target scene, is similar to the step 103 described above, and details thereof are thus omitted herein for brevity.

Step 604: performing, by the decoder, decoding on the feature index sequence to obtain reconstructed semantic occupancy data corresponding to the target scene.

By way of example, after obtaining the feature index sequence, the electronic device can perform, by means of the decoder, decoding on the feature index sequence to obtain reconstructed semantic occupancy data corresponding to the target scene. Wherein, the process that the electronic device performs, by means of the decoder, decoding on the feature index sequence to obtain reconstructed semantic occupancy data corresponding to the target scene, is similar to the steps 105 and 106 described above, and details thereof are thus omitted herein for brevity.

Step 605: training the encoder and/or decoder based on the sample semantic occupancy data, the reconstructed semantic occupancy data and a first loss function, to obtain a trained tokenizer.

By way of example, after generating, by means of the initial tokenizer, the reconstructed semantic occupancy data from the sample semantic occupancy data, the electronic device can determine the occupancy state information and the semantic category information of the sample semantic occupancy data, and the occupancy state information and the semantic category information of the reconstructed occupancy data, respectively. Next, the electronic device can perform parameter optimization on the encoder and/or the decoder based on the occupancy state information and the semantic category information of the sample semantic occupancy data, the occupancy state information and the semantic category information of the reconstructed semantic occupancy data, and a preset first loss function to obtain an encoder and/or a decoder after parameter optimization. Wherein, the first loss function is used for performing parameter optimization on the encoder and/or decoder based on an error between the sample semantic occupancy data and the reconstructed semantic occupancy data with respect to occupancy state information and semantic category information.

Step 606: training the feature codebook based on the bird's-eye view feature map, the feature index sequence and a second loss function, to obtain a trained tokenizer.

By way of example, the feature index in the feature index sequence is an index of a symbol in the feature codebook. Therefore, after obtaining the feature index sequence, the electronic device can map the respective feature indexes in the feature index sequence into the feature codebook to obtain symbols corresponding to the respective feature indexes. Then, the electronic device can generate a feature vector sequence based on the symbols corresponding to the respective feature indexes. Wherein, the respective feature vectors in the feature vector sequence are symbols in the feature codebook that have the closest vector distances from the feature vectors corresponding to the respective pixel points in the bird's-eye view feature map. Thereafter, the electronic device can determine, based on the feature vectors corresponding to the respective pixel points in the bird's-eye view feature map and the respective feature vectors in the feature vector sequence, vector distances corresponding to the respective pixel points in the bird's-eye view feature map. Finally, the electronic device can train the feature codebook based on the vector distances corresponding to the respective pixel points in the bird's-eye view feature map, and the second loss function, to obtain the trained tokenizer.

It is worth noting that the electronic device can train the encoder, decoder and the feature codebook separately, or can train any number of the encoder, the decoder and the feature codebook, which is not limited in the embodiment of the present disclosure.

In the embodiment of the present disclosure, by training the encoder, the decoder and the feature codebook in the tokenizer, the electronic device can guarantee that the tokenizer can accurately code and decode the sample semantic occupancy data of the target scene.

Referring to Fig. 7, on the basis of the embodiment shown in Fig. 6, the step 605 may include the following steps: Step 6051: determining a first loss value of the first loss function based on the occupancy state information of the sample semantic occupancy data, the occupancy state information of the reconstructed semantic occupancy data, and the first loss function.

By way of example, after generating, by means of the initial tokenizer, the reconstructed semantic occupancy data from the sample semantic occupancy data, the electronic device can determine the occupancy state information $X_{s,a}$ of the sample semantic occupancy data, and the occupancy state information $X_{r,a}$ of the reconstructed semantic occupancy data. Next, the electronic device can determine the first loss value of the first loss function based on the occupancy state information $X_{s,a}$, the occupancy state information $X_{r,a}$ of the reconstructed semantic occupancy data and the first loss function. A smaller first loss value of the first loss function indicates a higher consistency between the sample semantic occupancy data and the reconstructed semantic occupancy data with respect to occupancy state information.

For example, the first loss function is a reconstruction loss $L_r$. The reconstruction loss $L_r$ includes a cross-entropy loss function $L_{ce}$ and a Lovasz-Softmax loss function $L_{ls}$. The reconstruction loss is $L_r = \mathcal{L}_{ce} + \lambda_1 \mathcal{L}_{ls}$. Wherein, $\lambda_1$ is a weight of the Lovasz-Softmax loss function $L_{ls}$. Correspondingly, the first loss value of the first loss function is $L_r(X_{r,a}, X_{s,a}) = \mathcal{L}_{ce}(X_{r,a}, X_{s,a}) + \lambda_1 \mathcal{L}_{ls}(X_{r,a}, X_{s,a})$.

Step 6052: determining a second loss value of the first loss function based on the semantic category information of the sample semantic occupancy data, the semantic category information of the reconstructed semantic occupancy data and the first loss function.

By way of example, after generating, by means of the initial tokenizer, the reconstructed semantic occupancy data from the sample semantic occupancy data, the electronic device can determine the semantic category information $X_{s,b}$ of the sample semantic occupancy data, and the semantic category information $X_{r,b}$ of the reconstructed semantic occupancy data. Next, the electronic device can determine the second loss value of the first loss function based on the semantic category information $X_{s,b}$ of the sample semantic occupancy data, the semantic category information $X_{r,b}$ of the reconstructed semantic occupancy data and the first loss function. A smaller second loss value of the first loss function indicates a higher consistency between the sample semantic occupancy data and the reconstructed semantic occupancy data with respect to semantic category information.

For example, the first loss function is a reconstruction loss $L_r$. The reconstruction loss $L_r$ includes a cross-entropy loss function $L_{ce}$ and a Lovasz-Softmax loss function $L_{ls}$. The reconstruction loss is $L_r = \mathcal{L}_{ce} + \lambda_1 \mathcal{L}_{ls}$. Wherein, $\lambda_1$ is a weight of the Lovasz-Softmax loss function $L_{ls}$. Correspondingly, the second loss value of the first loss function is $L_r(X_{r,b}, X_{s,b}) = \mathcal{L}_{ce}(X_{r,b}, X_{s,b}) + \lambda_1 \mathcal{L}_{ls}(X_{r,b}, X_{s,b})$.

Step 6053: training the encoder and/or the decoder based on the first loss value and the second loss value.

By way of example, after obtaining the first loss value and the second loss value, the electronic device can determine the weighted value of the first loss value and the second loss value as the total loss value of the first loss function. For example, the total loss value of the first loss function is $L_{r,sum} = \lambda_2 L_r(X_{r,a}, X_{s,a}) + \lambda_3 L_r(X_{r,b}, X_{s,b})$. Wherein, $\lambda_2$ is the weight corresponding to the first loss value, and $\lambda_3$ is the weight corresponding to the second loss value. A smaller total loss value of the first loss function indicates a higher consistency between the sample semantic occupancy data and the reconstructed semantic occupancy data with respect to occupancy state information and semantic category information, which further proves a higher consistency between the sample semantic occupancy data and the reconstructed semantic occupancy data. Then, the electronic device can perform, based on the total loss value of the first loss function, parameter optimization on the encoder and/or decoder in the initial tokenizer to obtain the encoder and/or decoder having been subject to the parameter optimization. Further, the electronic device can generate, based on the encoder and decoder having been subject to the parameter optimization, reconstructed semantic occupancy data from the sample semantic occupancy data. Subsequently, the electronic device can determine the first loss value of the first loss function based on the occupancy state information of the sample semantic occupancy data, the occupancy state information of the reconstructed semantic occupancy data and the first loss function, and determine the second loss value of the first loss function based on the semantic category information of the sample semantic occupancy data, the semantic category information of the reconstructed semantic occupancy data and the first loss function. Thereafter, the electronic device can determine the total loss value of the first loss function based on the first loss value and the second loss value, and perform, based on the total loss value of the first loss function, parameter optimization again on the encoder and/or decoder having been subject to parameter optimization, until the total loss value of the first loss function reaches the minimum value, or the number of parameter optimizations reaches a preset optimization threshold.

In the embodiment of the present disclosure, the electronic device can determine a first loss value of the first loss function based on the occupancy state information of the sample semantic occupancy data, the occupancy state information of the reconstructed semantic occupancy data and the first loss function. Next, the electronic device can determine a second loss value of the first loss function based on the semantic category information of the sample semantic occupancy data, the semantic category information of the reconstructed semantic occupancy data and the first loss function. Thereafter, the electronic device can train the encoder and/or the decoder based on the first loss value and the second loss value. In this way, the present disclosure can ensure the consistency between the sample semantic occupancy data and the reconstructed semantic occupancy data with respect to occupancy state and semantic category.

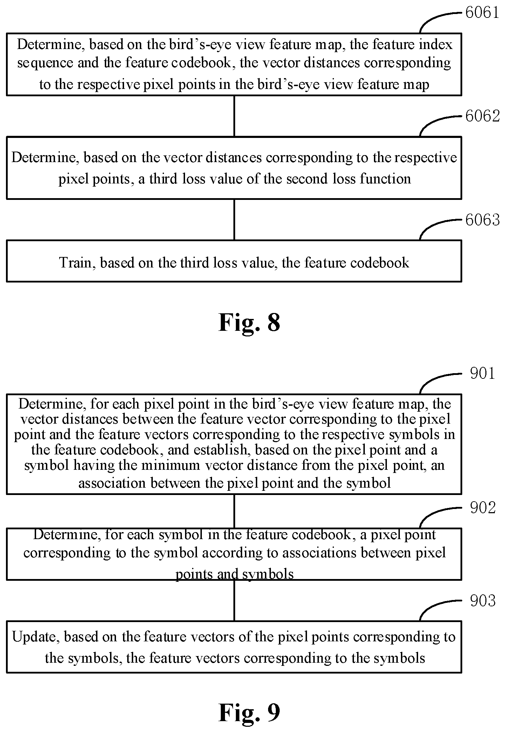

Referring to Fig. 8, on the basis of the embodiment shown in Fig. 6, the step 606 may include the following steps: Step 6061: determining, based on the bird's-eye view feature map, the feature index sequence and the feature codebook, the vector distances corresponding to the respective pixel points in the bird's-eye view feature map.

By way of example, the feature indexes in the feature index sequence are indexes of symbols in the feature codebook. Therefore, after obtaining the feature index sequence, the electronic device can map the respective feature indexes in the feature index sequence into the feature codebook to obtain symbols corresponding to the respective feature indexes. Then, the electronic device can generate a feature vector sequence based on symbols corresponding to the respective feature indexes. Wherein, the respective feature vectors in the feature vector sequence are symbols in the feature codebook that have the minimum vector distances from the feature vectors corresponding to respective pixel points in the bird's-eye view feature map. Subsequently, the electronic device can determine vector distances (e.g., L2 distances) corresponding to the respective pixel points in the bird's-eye view feature map based on the feature vectors corresponding to the respective pixel points in the bird's-eye view feature map and the respective feature vectors in the feature vector sequence.

Step 6062: determining, based on the vector distances corresponding to the respective pixel points, a third loss value of the second loss function.

By way of example, after obtaining the vector distances corresponding to the respective pixel points in the bird's-eye view feature map, the electronic device can determine a sum of the vector distances corresponding to the respective pixel points as the third loss value of the second loss function. A smaller third loss value of the second loss function indicates smaller vector distances corresponding to the respective pixel points in the bird's-eye view feature map, which demonstrates that the feature vectors corresponding to the respective pixel points in the bird's-eye view feature map are closer to the respective feature vectors in the feature vector sequence which have been subject to the feature codebook vector quantization. For example, the second loss function is a vector quantization loss function.

Step 6063: training, based on the third loss value, the feature codebook.

By way of example, after obtaining the third loss value of the second loss function, the electronic device can optimize the respective symbols in the feature codebook based on the third loss value to obtain the feature codebook after symbol optimization. Further, based on the feature codebook after the symbol optimization, the electronic device can determine the vector distances corresponding to the respective pixel points in the bird's-eye view feature map again. Next, the electronic device can determine, based on the vector distances corresponding to the respective pixel points, the third loss value of the second loss function, and optimize, based on the third loss value, the respective symbols in the feature codebook after symbol optimization again, until the third loss value of the second loss function reaches the minimum value, or the number of symbol optimizations reaches the preset optimization threshold.

In the embodiment of the present disclosure, the electronic device determines, based on the bird's-eye view feature map, the feature index sequence and the feature codebook, the vector distances corresponding to the respective pixel points in the bird's-eye view feature map. Then, the electronic device determines the third loss value of the second loss function based on the vector distances corresponding to the respective pixel points, and trains the feature codebook based on the third loss value. In this way, the vector quantization accuracy can be improved.

It is worth noting that, in the case that the electronic device trains simultaneously the encoder, the decoder and the feature codebook based on the first loss function and the second loss function, the loss functions mentioned above can be represented by the following equation:

$$\mathrm{L} = \lambda_2 \mathrm{L_r}\big(X_{\mathrm{r,a}}, X_{\mathrm{s,a}}\big) + \lambda_3 \mathrm{L_r}\big(X_{\mathrm{r,b}}, X_{\mathrm{s,b}}\big) + L_{vq}$$

$$\mathrm{L_r} = \mathcal{L}_{\mathrm{ce}} + \lambda_1 \mathcal{L}_{\mathrm{ls}}$$

Wherein, L is the total loss value of the first and the second loss function, the first loss function is reconstruction loss $L_r$, the reconstruction loss $L_r$ includes the cross-entropy loss function $L_{ce}$ and the Lovasz-Softmax loss function $L_{ls}$, $\lambda_1$ is the weight of the Lovasz-Softmax loss function $L_{ls}$, $X_{s,a}$ and $X_{r,a}$ are the occupancy state information of the sample semantic occupancy data and the occupancy state information of the reconstructed semantic occupancy data, respectively, $X_{s,b}$ and $X_{r,b}$ are semantic category information of the semantic occupancy data and semantic category information of the reconstructed semantic occupancy data, respectively, $L_r$ ($X_{r,a}$, $X_{s,a}$) is the first loss value of the first loss function, $L_r$ ($X_{r,b}$, $X_{s,b}$) is the second loss value of the first loss function, $\lambda_2$ is the weight corresponding to the first loss value, $\lambda_3$ is the weight corresponding to the second loss value, and the second loss function is the vector quantization loss function $L_{vq}$.

As shown in Fig. 9, the electronic device can further initialize the initial feature codebook, which may specifically include the following steps:

Step 901: determining, for each pixel point in the bird's-eye view feature map, the vector distances between the feature vector corresponding to the pixel point and the feature vectors corresponding to the respective symbols in the feature codebook, and establishing, based on the pixel point and a symbol having the minimum vector distance from the pixel point, an association between the pixel point and the symbol.

By way of example, after obtaining the bird's-eye view feature map, the electronic device can flatten the feature vectors of the respective pixel points in the bird's-eye view feature map into the feature vector sequence corresponding to the bird's-eye view feature map, according to a preset sequence (e.g., from top to bottom, or from left to right). The electronic device may pre-store the initial feature codebook. The initial feature codebook includes a plurality of initial symbols, where an initial symbol corresponds to a feature vector.

Further, after obtaining the feature vector sequence corresponding to the bird's-eye view feature map, the electronic device can compute, for each pixel point in the bird's-eye view feature map, the vector distances (e.g., L2 distances) between the feature vector corresponding to the pixel point and the feature vectors corresponding to the respective initial symbols in the initial feature codebook. Next, the electronic device can establish, based on the pixel point and the initial symbol having the minimum vector distance from the pixel point, an association between the pixel point and the initial symbol. Wherein, the association between the pixel point and the initial symbol may include a one-to-one correspondence relationship, a one-to-multiple correspondence relationship, or a multiple-to-one correspondence relationship therebetween, which is not limited in the embodiment of the present disclosure.

Step 902: determining, for each symbol in the feature codebook, a pixel point corresponding to the symbol according to associations between symbols and pixel points.

By way of example, after determining the associations between the pixel points and the initial symbols, the electronic device can query, for each initial symbol in the initial feature codebook, a pixel point corresponding to the initial symbol according to the associations between symbols and pixel points. Wherein, feature vectors of one or more pixel points corresponding to the initial symbol form a feature vector cluster corresponding to the initial symbol.

Step 903: updating, based on the feature vectors of the pixel points corresponding to the symbols, the feature vectors corresponding to the symbols.

By way of example, after determining the pixel points corresponding to the initial symbols, the electronic device can update the feature vectors corresponding to the respective symbols based on the feature vectors of the pixel points corresponding to the initial symbols (i.e., the feature vector clusters corresponding to the initial symbols). For example, the electronic device can update, based on an average value of the feature vectors in the feature vector cluster corresponding to an initial symbol, the feature vector corresponding to the symbol.

The steps 901 and 903 described above may be represented by the following equation:

$$\hat{z}_k^{(t+1)} = \frac{1}{|C_k|} \sum_{z_i \in C_k} z_i, C_k = z_i | \arg \min_j \| z_i - \hat{z}_j \|_2 = k$$

Wherein, $\hat{z}_k^{(t+1)}$ is the feature vector corresponding to the updated $k^{th}$ initial symbol $\hat{z}_k$ after performing the $(t+1)^{th}$ iterative updating on the initial feature codebook, $C_k$ is the feature vector cluster corresponding to the $k^{th}$ initial symbol $\hat{z}_k$, $C_k = z_i | \arg \min_j \| z_i - \hat{z}_j \|_2 = k$ indicates that the feature vector cluster $C_k$ consists of the feature vector $z_i$ corresponding to the $i^{th}$ pixel point, and the index j of the $j^{th}$ initial symbol $\hat{z}_j$ having the minimum vector distance from the feature vector $z_i$ corresponding to the $i^{th}$ pixel point is equal to k.

In the embodiment of the present disclosure, the electronic device can improve the tokenizer training speed by initializing the initial feature codebook.

Example apparatus

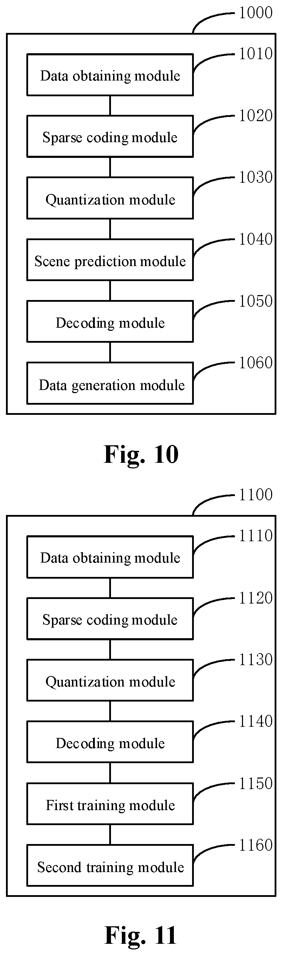

Fig. 10 illustrates a schematic diagram of a structure of a target scene prediction apparatus provided by an example embodiment of the present disclosure. As shown therein, the target scene prediction apparatus 1000 includes: a data obtaining module 1010, a sparse coding module 1020, a quantization module 1030, a scene prediction module 1040, a decoding module 1050 and a data generation module 1060.

The data obtaining module 1010 is used for obtaining first semantic occupancy data corresponding to the target scene at a first time point;

the sparse coding module 1020 is used for performing sparse coding on the first semantic occupancy data to obtain a bird's-eye view feature map corresponding to the target scene at the first time point;

the quantization module 1030 is used for performing, based on a feature codebook, quantization on the bird's-eye view feature map to obtain a first feature index sequence corresponding to the target scene at the first time point;

the scene prediction module 1040 is used for performing, based on the first feature index sequence, scene prediction using a scene prediction model to obtain a second feature index sequence corresponding to the target scene at a second time point;

the decoding module 1050 is used for performing decoding on the second feature index sequence to obtain occupancy state information and semantic category information of second semantic occupancy data corresponding to the target scene at the second time point; and

the data generation module 1060 is used for generating, based on the occupancy state information and the semantic category information, the second semantic occupancy data corresponding to the target scene at the second time point.

In some embodiments, the sparse coding module 1020 includes:

a pseudo point cloud determining unit for performing sparsification on the first semantic occupancy data to obtain pseudo point cloud data corresponding to the target scene at the first time point; and

a bird's-eye view map determining unit for performing feature aggregation and feature extraction on the pseudo point cloud data to obtain the bird's-eye view feature map corresponding to the target scene at the first time point.

In some embodiments, the first semantic occupancy data is three-dimensional voxel grid data, and each voxel grid in the three-dimensional voxel grid data corresponds to a semantic category; the pseudo point cloud determining unit is specifically used for:

performing voxel grid stacking on the first semantic occupancy data along a height direction to obtain voxel pillar data;

determining, for each voxel pillar in the voxel pillar data, a preset number of target voxel grids belonging to a target category from respective voxel grids included in the voxel pillar; and

determining, based on height coordinates and the semantic category of the target voxel grids included in the respective voxel pillars, pseudo point cloud data of the target scene at the first time point.

In some embodiments, the bird's-eye view map determining unit is specifically used for:

performing the feature aggregation along a bird's-eye view direction on the target voxel grids included in the respective voxel pillars of the pseudo point cloud data to obtain a pseudo feature map; and

performing the feature extraction on the pseudo feature map to obtain the bird's-eye view feature map corresponding to the target scene at the first time point.

In some embodiments, the quantization module 1030 includes:

a symbol determining unit for determining, for each pixel point in the bird's-eye view feature map, vector distances between a feature vector corresponding to the pixel point and feature vectors respectively corresponding to symbols in the feature codebook, and determining a symbol having a minimum vector distance from the pixel point as a target symbol corresponding to the pixel point; and

a feature index sequence determining unit for determining, based on indexes of target symbols corresponding to respective pixel points, a first feature index sequence corresponding to the target scene at the first time point.

In some embodiments, the decoding module 1050 includes:

a feature vector sequence determining unit for performing, based on the feature codebook, mapping on the second feature index sequence to obtain a feature vector sequence;

a dense feature determining unit for performing stacked deconvolution and upsampling on the feature vector sequence to obtain a dense feature vector; and

a classification unit for performing occupancy state classification and semantic category classification on the dense feature vector to obtain the occupancy state information and the semantic category information of the second semantic occupancy data corresponding to the target scene at the second time point.

In some embodiments, the classification unit is specifically used for:

performing the occupancy state classification on the dense feature vector, and determining occupancy states corresponding to respective voxel grids in the second semantic occupancy data to obtain the occupancy state information of the second semantic occupancy data corresponding to the target scene at the second time point;

performing the semantic category classification on first voxel grids with an occupancy state being occupied to obtain semantic categories of the respective first voxel grids; and

determining, based on the semantic categories of the first voxel grids and semantic categories corresponding to second voxel grids, the semantic category information of the second semantic occupancy data corresponding to the target scene at the second time point, the second voxel grids being voxel grids with an occupancy state being unoccupied.

For the advantageous technical effects corresponding to the example embodiment of the apparatus, see the corresponding advantageous technical effects described above in the section of Example Method, which will not be detailed herein for brevity.

Fig. 11 illustrates a schematic diagram of a structure of a tokenizer training apparatus provided by an example embodiment. The tokenizer includes: an encoder, a feature codebook and a decoder, and as shown in Fig. 11, the tokenizer training apparatus 1100 includes a data obtaining module 1110, a sparse coding module 1120, a quantization module 1130, a decoding module 1140, a first training module 1150 and a second training module 1160.

The data obtaining module 1110 is used for obtaining sample semantic occupancy data corresponding to a target scene;

the sparse coding module 1120 is used for performing, by the encoder, sparse coding on the sample semantic occupancy data to obtain a bird's-eye view feature map corresponding to the target scene;

the quantization module 1130 is used for performing, based on the feature codebook, quantization on the bird's-eye view feature map to obtain a feature index sequence corresponding to the target scene;

the decoding module 1140 is used for performing, by means of the decoder, decoding on the feature index sequence to obtain reconstructed semantic occupancy data corresponding to the target scene;

the first training module 1150 is used for training the encoder and/or decoder based on the sample semantic occupancy data, the reconstructed semantic occupancy data and a first loss function, to obtain a trained tokenizer; and/or

the second training module 1160 is used for training the feature codebook based on the bird's-eye view feature map, the feature index sequence and a second loss function, to obtain a trained tokenizer.

For the advantageous technical effects corresponding to the example embodiment of the apparatus, see the corresponding advantageous technical effects described above in the section of Example Method, which will not be detailed herein for brevity.

Example Electronic Device

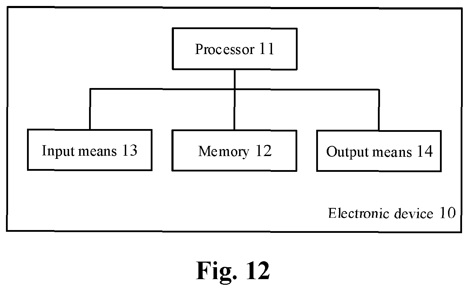

Fig. 12 illustrates a diagram of a structure of an electronic device provided by embodiments of the present disclosure, which includes at least one processor 11 and a memory 12.

The processor 11 may be a Central Processing Unit (CPU) or other form of processing unit with a data processing capability and/or an instruction execution capability, and can control other components in the electronic device 10 to perform a desired function.

The memory 12 may include one or more computer program products that may include various forms of computer readable storage media, for example, a volatile memory and/or a non-volatile memory. The volatile memory may include, for example, a Random Access Memory (RAM) and/or a cache, and the like. The non-volatile memory may include, for example, a Read-Only Memory (ROM), a hard disk, a flash memory, and the like. The computer readable storage medium may have one or more computer program instructions stored thereon, and the processor 11 can run the one or more computer program instructions to implement the methods described above in the various embodiments of the present disclosure, and/or other desired functions.

In an example, the electronic device 10 may include: input means 13 and output means 14, where the components are interconnected via a bus system and/or a connection mechanism in other form (not shown).

The input means 13 may further include, for example, a keyboard, a mouse, and the like.

The output means 14 can output various types of information to the outside, which may include, for example, a display, a speaker, a printer, a communication network and remote output means connected therewith, and the like.

For simplicity, Fig. 12 only shows some components related to the present disclosure in the electronic device 10, and omits therefrom components such as a bus, an input/output interface, and the like. In addition, according to the specific application, the electronic device 10 may further include any other appropriate components.

Example computer program product and computer readable storage medium

In addition to the methods and apparatus described above, the embodiments of the present disclosure further provide a computer program product including computer program instructions, where the computer program instructions, when run by the processor, cause the processor to execute steps of the methods according to the various embodiments of the present disclosure described above in the "Example Method" section.

The computer program product can write computer program code for performing operations of the present disclosure by using one or more program design language or any combination. The program design language includes, but is not limited to, object-oriented program design language such as Java, C++, and the like, and further includes conventional procedural program design language such as "C" or similar program design language. The program code may be completely or partially executed on a user computer, performed as an independent software packet, partially executed on the user computer and partially executed on a remote computer, or completely executed on the remote computer or a server.

Moreover, the embodiments of the present disclosure may further relate to a computer readable storage medium having computer program instructions stored thereon, where the computer program instructions, when run by the processor, cause the processor to execute steps of the target scene prediction method and the tokenizer training method according to the various embodiments of the present disclosure described above in the "Example Method" section.

The computer readable storage medium may be a readable medium or any combination of a plurality of readable media. The readable medium may be a readable signal medium or a readable storage medium. A readable medium may include, but is not limited to, an electronic, magnetic, optical, electromagnetic, infrared, or semiconductor system, apparatus, or device, or any suitable combination of the foregoing. More specific examples of a computer-readable storage medium would include an electrical connection based on one or more wires, a portable computer diskette, a hard disk, a Random Access Memory (RAM), a Read-Only Memory (ROM), an Erasable Programmable Read-Only Memory (EPROM or flash memory), an optical fiber, a Compact Disc Read-Only memory (CD-ROM), an optical storage device, a magnetic storage device, or any suitable combination of the foregoing.

Although the basic principles of the present disclosure have been described above with reference to the specific embodiments, the advantages, benefits, effects, and the like are merely mentioned herein as examples, without limitations, which should not be construed as essentials of each embodiment of the present disclosure. In addition, the details disclosed above are provided only for illustration and ease of understanding, rather than limitation, which do not require that the present disclosure be implemented with those details.

Those skilled in the art are allowed to make various modifications and variations to the present disclosure without departing from the spirit and scope described herein. Therefore, if the modifications and variations thereto fall within the scope defined by the claims of the present disclosure and the equivalents thereof, the present disclosure is also intended to cover those modifications and variations.

**Claims**

1. A method for predicting a target scene, comprising:

obtaining first semantic occupancy data corresponding to the target scene at a first time point;
performing sparse coding on the first semantic occupancy data to obtain a bird's-eye view feature map corresponding to the target scene at the first time point;
performing, based on a feature codebook, quantization on the bird's-eye view feature map to obtain a first feature index sequence corresponding to the target scene at the first time point;
performing, based on the first feature index sequence, scene prediction using a scene prediction model to obtain a second feature index sequence corresponding to the target scene at a second time point;
performing decoding on the second feature index sequence to obtain occupancy state information and semantic category information of second semantic occupancy data corresponding to the target scene at the second time point; and
generating, based on the occupancy state information and the semantic category information, the second semantic occupancy data corresponding to the target scene at the second time point.

2. The method of claim 1, wherein performing the sparse coding on the first semantic occupancy data to obtain the bird's-eye view feature map corresponding to the target scene at the first time point, comprises:

performing sparsification on the first semantic occupancy data to obtain pseudo point cloud data corresponding to the target scene at the first time point; and
performing feature aggregation and feature extraction on the pseudo point cloud data to obtain the bird's-eye view feature map corresponding to the target scene at the first time point.

3. The method of claim 2, wherein the first semantic occupancy data is three-dimensional voxel grid data, and each voxel grid in the three-dimensional voxel grid data corresponds to a semantic category; and performing the sparsification on the first semantic occupancy data to obtain the pseudo point cloud data corresponding to the target scene at the first time point, comprises:

performing voxel grid stacking on the first semantic occupancy data along a height direction to obtain voxel pillar data;
determining, for each voxel pillar in the voxel pillar data, a preset number of target voxel grids belonging to a target category from respective voxel grids included in the voxel pillar; and
determining, based on height coordinates and the semantic category of the target voxel grids included in respective voxel pillars, pseudo point cloud data corresponding to the target scene at the first time point.

4. The method of claim 3, wherein performing the feature aggregation and the feature extraction on the pseudo point cloud data to obtain the bird's-eye view feature map corresponding to the target scene at the first time point, comprises:

performing the feature aggregation along a bird's-eye view direction on the target voxel grids included in the respective voxel pillars of the pseudo point cloud data to obtain a pseudo feature map; and
performing the feature extraction on the pseudo feature map to obtain the bird's-eye view feature map corresponding to the target scene at the first time point.

5. The method of any one of claims 1 to 4, wherein performing, based on the feature codebook, the quantization on the bird's-eye view feature map to obtain the first feature index sequence corresponding to the target scene at the first time point, comprises:

determining, for each pixel point in the bird's-eye view feature map, vector distances between a feature vector corresponding to the pixel point and feature vectors respectively corresponding to symbols in the feature codebook, and determining a symbol having a minimum vector distance from the pixel point as a target symbol corresponding to the pixel point; and
determining, based on indexes of target symbols corresponding to respective pixel points, a first feature index sequence corresponding to the target scene at the first time point.

6. The method of any one of claims 1 to 5, wherein performing the decoding on the second feature index sequence to obtain the occupancy state information and the semantic category information of the second semantic occupancy data corresponding to the target scene at the second time point, comprises:

> performing, based on the feature codebook, mapping on the second feature index sequence to obtain a feature vector sequence;
> performing stacked deconvolution and upsampling on the feature vector sequence to obtain a dense feature vector; and
> performing occupancy state classification and semantic category classification on the dense feature vector to obtain the occupancy state information and the semantic category information of the second semantic occupancy data corresponding to the target scene at the second time point.

7.  The method of claim 6, wherein performing the occupancy state classification and the semantic category classification on the dense feature vector to obtain the occupancy state information and the semantic category information of the second semantic occupancy data corresponding to the target scene at the second time point, comprises:

> performing the occupancy state classification on the dense feature vector, and determining occupancy states corresponding to respective voxel grids in the second semantic occupancy data to obtain the occupancy state information of the second semantic occupancy data corresponding to the target scene at the second time point;
> performing the semantic category classification on first voxel grids with an occupancy state being occupied to obtain semantic categories of the respective first voxel grids; and
> determining, based on the semantic categories of the first voxel grids and semantic categories corresponding to second voxel grids, the semantic category information of the second semantic occupancy data corresponding to the target scene at the second time point, the second voxel grids being voxel grids with an occupancy state being unoccupied.

8.  The method of any of claims 1-7, wherein the feature codebook comprises a plurality of symbols, and each of the plurality of symbols corresponds to a feature vector.

9.  A training method for a tokenizer comprising an encoder, a feature codebook and a decoder, the training method comprising:

> obtaining sample semantic occupancy data corresponding to a target scene;
> performing, by the encoder, sparse coding on the sample semantic occupancy data to obtain a bird's-eye view feature map corresponding to the target scene;
> performing, based on the feature codebook, quantization on the bird's-eye view feature map to obtain a feature index sequence corresponding to the target scene;
> performing, by the decoder, decoding on the feature index sequence to obtain reconstructed semantic occupancy data corresponding to the target scene;
> training the encoder and/or decoder based on the sample semantic occupancy data, the reconstructed semantic occupancy data and a first loss function, to obtain a trained tokenizer for implementing the method for predicting a target scene of any of claims 1-8; and/or
> training the feature codebook based on the bird's-eye view feature map, the feature index sequence and a second loss function, to obtain a trained tokenizer for implementing the method for predicting a target scene of any of claims 1-8.

10. The training method of claim 9, wherein training the encoder and/or decoder based on the sample semantic occupancy data, the reconstructed semantic occupancy data and the first loss function to obtain a trained tokenizer, comprises:

> determining a first loss value of the first loss function based on occupancy state information of the sample semantic occupancy data, occupancy state information of the reconstructed semantic occupancy data, and the first loss function;
> determining a second loss value of the first loss function based on semantic category information of the sample semantic occupancy data, semantic category information of the reconstructed semantic occupancy data and the first loss function; and
> training the encoder and/or the decoder based on the first loss value and the second loss value.

11. The training method of claim 9 or 10, wherein training the feature codebook based on the bird's-eye view feature map, the feature index sequence and the second loss function to obtain a trained tokenizer, comprises:

determining, based on the bird's-eye view feature map, the feature index sequence and the feature codebook, vector distances corresponding to the respective pixel points in the bird's-eye view feature map;
determining, based on the vector distances corresponding to the respective pixel points, a third loss value of the second loss function; and
training, based on the third loss value, the feature codebook.

12. The training method of any one of claims 9 to 11, further comprising initializing the feature codebook by:

determining, for each pixel point in the bird's-eye view feature map, vector distances between the feature vector corresponding to the pixel point and feature vectors corresponding to the respective symbols in the feature codebook, and establishing, based on the pixel point and a symbol having the minimum vector distance from the pixel point, an association between the pixel point and the symbol;
determining, for each symbol in the feature codebook, a pixel point corresponding to the symbol according to associations between symbols and pixel points; and
updating, based on the feature vectors of the pixel points corresponding to the symbols, the feature vectors corresponding to the symbols.

13. A computer program product tangibly stored in a non-volatile computer-readable medium and comprising machine-executable instructions that, when executed by a device, cause the device to execute the method for predicting a target scene of any of claims 1-8, and/or the training method for a tokenizer of any of claims 9-12.

14. A computer-readable storage medium, wherein the storage medium stores a computer program thereon, and the computer program is used for performing the method for predicting a target scene of any of claims 1-8, and/or the training method for a tokenizer of any of claims 9-12.

15. An electronic device, comprising:

a processor; and
a memory for storing executable instructions by the processor;
wherein the processor is configured to read the executable instructions from the memory, and execute the instructions to implement the method for predicting a target scene of any of claims 1-8, and/or the training method for a tokenizer of any of claims 9-12.

Obtain first semantic occupancy data corresponding to the target scene at a first time point — 101

Perform sparse coding on the first semantic occupancy data to obtain a bird's-eye view feature map corresponding to the target scene at the first time point — 102

Perform, based on a feature codebook, quantization on the bird's-eye view feature map to obtain a first feature index sequence corresponding to the target scene at the first time point — 103

Perform, based on the first feature index sequence, scene prediction using a scene prediction model to obtain a second feature index sequence corresponding to the target scene at a second time point — 104

Perform decoding on the second feature index sequence to obtain occupancy state information and semantic category information of second semantic occupancy data corresponding to the target scene at the second time point — 105

Generate, based on the occupancy state information and the semantic category information, the second semantic occupancy data corresponding to the target scene at the second time point — 106

**Fig. 1**

**Fig. 2A**

Fig. 2B

```
                                                                        ⎧─1021
┌─────────────────────────────────────────────────────────────┐
│  Perform sparsification on the first semantic occupancy data to obtain  │
│  pseudo point cloud data corresponding to the target scene at the first │
│                        time point                             │
└─────────────────────────────────────────────────────────────┘
                              │                         ⎧─1022
┌─────────────────────────────────────────────────────────────┐
│  Perform feature aggregation and feature extraction on the pseudo point │
│  cloud data to obtain the bird's-eye view feature map corresponding to  │
│                 the target scene at the first time point      │
└─────────────────────────────────────────────────────────────┘
```

## Fig. 3

```
                                                                        ⎧─1031
┌─────────────────────────────────────────────────────────────┐
│  Determine, for each pixel point in the bird's-eye view feature map,    │
│  vector distances between a feature vector corresponding to the pixel    │
│  point and feature vectors respectively corresponding to symbols in the │
│  feature codebook, and determine a symbol having the minimum vector      │
│  distance from the pixel point as a target symbol corresponding to the  │
│                        pixel point                            │
└─────────────────────────────────────────────────────────────┘
                              │                         ⎧─1032
┌─────────────────────────────────────────────────────────────┐
│  Determine, based on indexes of target symbols corresponding to         │
│  respective pixel points, a first feature index sequence corresponding to│
│                 the target scene at the first time point      │
└─────────────────────────────────────────────────────────────┘
```

## Fig. 4

```
                                                                        ⎧─1051
┌─────────────────────────────────────────────────────────────┐
│  Perform, based on the feature codebook, mapping on the second feature  │
│            index sequence to obtain a feature vector sequence  │
└─────────────────────────────────────────────────────────────┘
                              │                         ⎧─1052
┌─────────────────────────────────────────────────────────────┐
│  Perform stacked deconvolution and upsamplingon the feature vector      │
│              sequence to obtain a dense feature vector        │
└─────────────────────────────────────────────────────────────┘
                              │                         ⎧─1053
┌─────────────────────────────────────────────────────────────┐
│  Perform occupancy state classification and semantic category           │
│  classification on the dense feature vector to obtain the occupancy state│
│  information and the semantic category information of the second         │
│  semantic occupancy data corresponding to the target scene at the second│
│                        time point                            │
└─────────────────────────────────────────────────────────────┘
```

## Fig. 5

601

Obtain sample semantic occupancy data corresponding to a target scene

602

Perform, by the encoder, sparse coding on the sample semantic occupancy data to obtain a bird's-eye view feature map corresponding to the target scene

603

Perform, based on the feature codebook, quantization on the bird's-eye view feature map to obtain a feature index sequence corresponding to the target scene

604

Perform, by the decoder, decoding on the feature index sequence to obtain reconstructed semantic occupancy data corresponding to the target scene

605

Train the encoder and/or encoder based on the sample semantic occupancy data, the reconstructed semantic occupancy data and a first loss function, to obtain a trained tokenizer

606

Train the feature codebook based on the bird's-eye view feature map, the feature index sequence and a second loss function, to obtain a trained tokenizer

**Fig. 6**

6051

Determine a first loss value of the first loss function based on the occupancy state information of the sample semantic occupancy data, the occupancy state information of the reconstructed semantic occupancy data, and the first loss function

6052

Determine a second loss value of the first loss function based on the semantic category information of the sample semantic occupancy data, the semantic category information of the reconstructed semantic occupancy data and the first loss function

6053

Train the encoder and/or the decoder based on the first loss value and the second loss value

**Fig. 7**

---

6061

Determine, based on the bird's-eye view feature map, the feature index sequence and the feature codebook, the vector distances corresponding to the respective pixel points in the bird's-eye view feature map

6062

Determine, based on the vector distances corresponding to the respective pixel points, a third loss value of the second loss function

6063

Train, based on the third loss value, the feature codebook

## Fig. 8

---

901

Determine, for each pixel point in the bird's-eye view feature map, the vector distances between the feature vector corresponding to the pixel point and the feature vectors corresponding to the respective symbols in the feature codebook, and establish, based on the pixel point and a symbol having the minimum vector distance from the pixel point, an association between the pixel point and the symbol

902

Determine, for each symbol in the feature codebook, a pixel point corresponding to the symbol according to associations between pixel points and symbols

903

Update, based on the feature vectors of the pixel points corresponding to the symbols, the feature vectors corresponding to the symbols

## Fig. 9

1000

1010
Data obtaining module

1020
Sparse coding module

1030
Quantization module

1040
Scene prediction module

1050
Decoding module

1060
Data generation module

**Fig. 10**

1100

1110
Data obtaining module

1120
Sparse coding module

1130
Quantization module

1140
Decoding module

1150
First training module

1160
Second training module

**Fig. 11**

Fig. 12